# EUROPEAN PATENT SPECIFICATION

(11) **EP 2 663 925 B1**
(45) Date of publication and mention of the grant of the patent: **14.09.2016**
(21) Application number: 12734114.7
(22) Date of filing: 12.01.2012
(51) Int. Cl.: G06F 9/50

(54) **A METHOD AND MECHANISM FOR PERFORMING BOTH SERVER-SIDE AND CLIENT-SIDE RENDERING OF VISUAL DATA**
VERFAHREN UND MECHANISMUS ZUR DURCHFÜHRUNG EINER SOWOHL SERVERSEITIGEN ALS AUCH CLIENTSEITIGEN DARSTELLUNG VISUELLER DATEN
PROCÉDÉ ET MÉCANISME PERMETTANT DE FOURNIR UN RENDU DES DONNÉES VISUELLES À LA FOIS DU CÔTÉ SERVEUR ET DU CÔTÉ CLIENT

(30) Priority: 14.01.2011 US 201161433127 P
(43) Date of publication of application: 20.11.2013
(73) Proprietor: Google Inc., Mountain View, CA 94043 (US)
(72) Inventor: DHARMAPURIKAR, Makarand, Fremont California 94555 (US)
(74) Representative: Boult Wade Tennant
(86) International application number: PCT/US2012/021117
(87) International publication number: WO 2012/097178

(56) References cited:
- US-A1- 2007 024 705
- US-A1- 2007 115 282
- US-A1- 2009 210 487
- US-A1- 2009 210 487
- US-A1- 2010 262 710
- US-A1- 2011 010 455
- US-B1- 6 377 257

## Description

### FIELD

The invention relates to the field of remote rendering.

### BACKGROUND

3D Graphics rendering systems, such as gaming PCs and gaming devices follow a standard architecture that typically includes:
1. CPU subsystem - it includes the main processor, memory and storage
2. Graphics subsystem - it includes the graphics processor (GPU) and associated memory
3. A Display subsystem that is connected to the GPU

The CPU subsystem and the GPU subsystem are connected through a high speed bus, such as PCI, AGP or PCI-Express. The GPU subsystem is connected to the Display through another high speed interface such as HDMI, DVI, or Display Port. The role of these components can be thought of as the CPU being responsible for describing the content at an abstract level and the GPU is responsible for rendering the content in a pixel form. The Display is responsible for visually showing the pixels to the user.

Typically, the main program generating the graphics, such as a game program, is run on the CPU where the game program listens to user input from keyboard or game pad. The game program executes the game logic and then sends commands to the GPU telling the GPU how to create a picture (also called as frame) that will be shown on the Display. This process is repeated several times every second to create an appearance of smooth motion on the Display. Typically it is repeated 30 times a second. This figure is also knows as refresh rate.

It is GPU's job to execute the commands sent by the CPU. Commands can be roughly categorized as "simple commands" that GPU can execute by itself, "indirect commands" that refer to data residing in the CPU's memory (known as System Memory), or commands that read the data generated by the GPU.

Typically the volume of data going from the CPU to GPU, and the system memory to GPU, far outweighs the data coming from the GPU to CPU. The performance of the GPU, and therefore the quality of the gaming experience, is directly proportional to the number of frames the GPU can process per second. The data transfer bandwidth between the CPU/System Memory and the GPU plays a crucial role in this performance. If the interface between the CPU and GPU is slow, this data transfer can be a bottleneck that will hurt performance. The pace of innovation in this interface (ISA, PCI, AGP, PCIE 1.0, PCIE 2.0, PCIE 3.0) has been brisk. A typical gaming system today has bandwidth of up to 4 Gbytes/Second.

The nature of the CPU-GPU and the GPU-Display interface has required that the CPU, GPU and Display be part of the same system to guarantee the best performance. This limitation has implications for system design, such as power consumption, size, portability, cooling requirements and noise.

For these and other reasons, there is interest in the graphics community to find ways physically to separate the CPU, GPU and Display, in a way that does not require rewriting of applications. Possible solutions range from physical separation at the electrical level, to software solutions that operate at higher levels.

The problem becomes even more complicated in a networked environment, in which the user may be remote from a server that houses the main program which generates the graphics. For example, many of the most popular modem applications are interactive multi-user games applications, in which the users' computing systems are connected by a network to a centralized game program on a remote server. The user interacts with the game program by providing inputs from the user's local computer system, but the visual contents that are seen by the user are instituted by the operations of the remote game program on the server, which are then locally displayed to the user on the user's local display device.

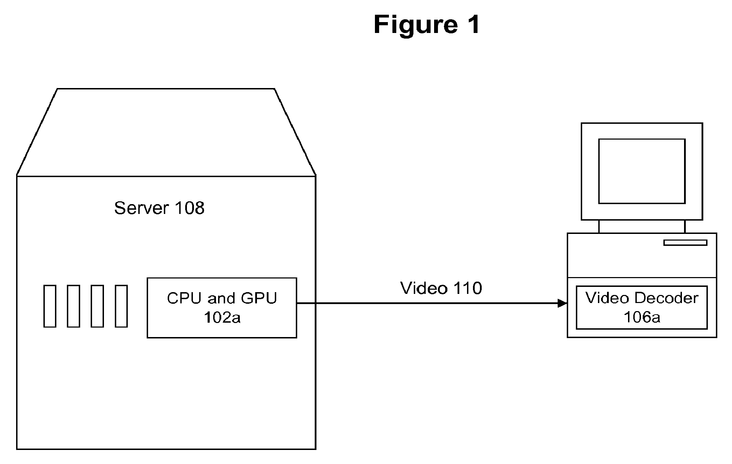

One possible approach to implement this type of networked system is to require the CPU and GPU at the server to generate and render video data at the server-side that will be sent to the client computer, and which will utilize the video decoder at the client to be displayed at the client-side. This approach is shown in Fig. 1, in which the CPU and GPU processors 102a located at the server 108 take on the entirety of the work needed to render the display graphics, so that only a stream of video display pixels 110 are sent to the client to be displayed by the video decoder 106a at the client.

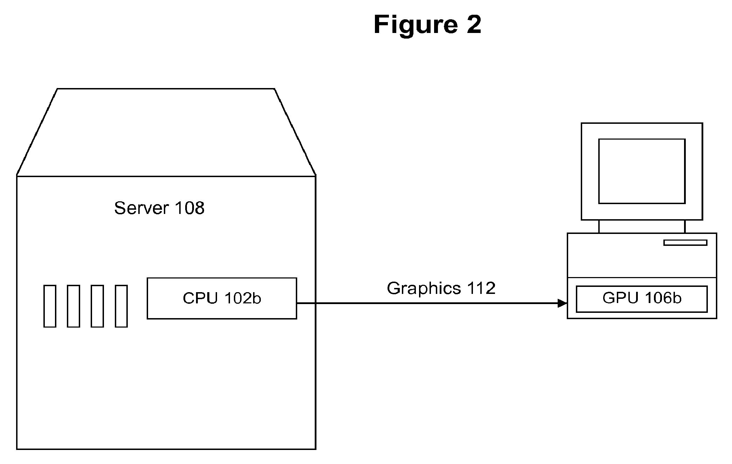

Alternatively, remote rendering may be employed to off-load some of the rendering workload to the client. This approach is shown in Fig. 2, in which the CPU 102b at the server 108 is responsible for operating the game logic, but it is the GPU. 106b at the client that takes care of processing graphics data 112 sent from the server 108 to locally render visual graphics to be displayed to the user.

Each of these approaches has its own specific advantages and disadvantages. For example, if the local GPU. is excessively underpowered (e.g., inadequate processor speed) or has insufficient system resources (e.g., insufficient memory), then the display performance using the approach of Fig. 2 may be much less desirable than the approach of Fig. 1. On the other hand the approach of Fig. 2 may provide much better performance than the approach of Fig. 1 under certain circumstances that can take advantage of the local GPU, e.g., displaying frames which do not undergo many changes will require much less network bandwidth in the approach of Fig. 2 compared to the approach of Fig. 1. While each approach has its own set of advantages compared to the other, there are no existing systems that can combine the best advantages of both into a single system.

US2009210487 (A1) discloses a system of client-server visualization with hybrid data processing, having a server digital data processor, that allows for server side rendering and processing image data, and client digital data processors simultaneously connected to the server, which receives messages from the clients, creates rendered images of data sets or other data processing results and sends those rendered images and results to the clients for display or further processing. Performing certain image rendering operations on either the server or the client according to which is better suited for the tasks requested by the user at any point in time, and possibly adjusting this division of work dynamically, improves rendering speed and application responsiveness on the clients.

### SUMMARY

The present invention in one aspect provides a computer implemented method for remote graphics rendering of visual data in a client-server system with a client and a server.

The present invention in another aspect provides such a method implemented as a system having means for implementing the method steps or as a computer program product comprising a computer-usable storage medium having executable code to execute the method steps.

In accordance with some embodiments, a method for implementing remote graphics rendering of visual data in a client-server system with a client and a server involves: performing a survey of the client-server system at the server to determine rendering capabilities of the server and rendering capabilities of the client; determining at the server whether rendering of the visual data is to be performed by the server or the client; when rendering of the visual data is to be performed by the server: rendering graphics data associated with the visual data at the server to generate video data and transmitting the video data by the server to the client; and when rendering of the visual data is determined to be performed by the client: generating graphics data associated with the visual data at the server and transmitting the graphics data to the client, wherein the graphics data is rendered by the client.

In one or more embodiments, the visual data is a video frame.

In one or more embodiments, the visual data is an object of a video frame.

In one or more embodiments, performing the server of the client-server system may involve: analyzing the visual data and analyzing graphics processing resources of the client.

Additional objectives and advantages may be realized when analyzing graphics processing resources of the client includes determining whether there are any known problems for the graphics processing resources of the client that would prevent the client form performing rendering activities. Additional objectives and advantages may also be realized when analyzing graphics processing resources of the client includes performing statistics monitoring to determine an amount of graphics processing memory that is available at the client. Additional objectives and advantages may also be realized when analyzing graphics processing resources of the client include determining any additional graphics processing memory required to perform rendering of the visual data at the client. Additional objectives and advantages may also be realized when analyzing graphics processing resources of the client includes determining an amount of available graphics processing resources of the client and determining an amount of graphics processing necessary to perform rendering of the visual data at the client. Additional objectives and advantages may also be realized when analyzing graphics processing resources of the client includes analyzing historical data associated with the graphics processing resources of the client to determine whether rendering of the visual data can be performed at the client.

Additional objectives and advantages may also be realized when determining the costs for performing server-side rendering for the visual data includes: evaluating a number of pixels needed to display the visual data and performing calculations to determine a bits/second bandwidth needed to transmit the number of pixels in a given period of time.

Additional objectives and advantages may also be realized when determining the costs for performing client-side rendering for the visual data includes: evaluating a quantity of graphics data needed to perform client-side rendering for the visual data and performing calculations to determine a bits/second bandwidth needed to transmit the quantity of graphics data in a given period of time.

Additional objectives and advantages may also be realized when comparing the costs for performing server-side rendering and client-side rendering for the visual data includes: determining that rendering of the visual data is to be performed by the server when the costs for performing client-side rendering exceed the costs for performing server-side rendering and determining that rendering of the visual data is to be performed by the client when the costs for performing server-side rendering exceed the costs for performing client-side rendering.

In accordance with other embodiments, a method for implementing remote graphics rendering of visual data in a client-server system with a client and a server includes: receiving, at the client, video data associated with a portion of the visual data, wherein the video data is generated by the server by rendering graphics data associated with the portion of the visual data; receiving, at the client, graphics data associated with another portion of the visual data; processing the video data at the client using a decoder; and rendering the graphics data at the client using graphics processing resources.

In one or more embodiments, the portion of the visual data and the other portion of the visual data are each a video frame.

In one or more embodiments, the portion of the visual data and the other portion of the visual data are each an object of a frame.

In one or more embodiments, the method further comprises: composing the visual data at the client using the processed video data associated with the portion of the visual data and the rendered graphics data associated with the other portion of the visual data and displaying the composed visual data at the client.

### BRIEF DESCRIPTION OF THE DRAWINGS

Fig. 1 illustrates an example approach for performing server-side rendering.
Fig. 2 illustrates an example approach for performing client-side rendering.
Fig. 3 illustrates an example architecture for performing both server-side and client-side rendering.
Fig. 4 illustrates a flowchart of an approach for performing both server-side and client-side rendering.
Fig. 5 illustrates a flowchart of an approach for determining whether to perform server-side and client-side rendering for an object.
Fig. 6 illustrates a flowchart of an approach for determining whether a client-side GPU is capable of rendering an object.
Fig. 7 illustrates a flowchart of an approach for determining costs of performing server-side and client-side rendering.
Fig. 8 depicts a computerized system on which a method for re-using digital assertions in a mixed signal context can be implemented.

### DETAILED DESCRIPTION

Some embodiments of the present invention are directed to an improved approach for rendering graphics that can utilize both server-side rendering and client-side rendering for the same display frame. In this way, the different visual objects within the same frame can be rendered using either approach, either at the server or at the client.

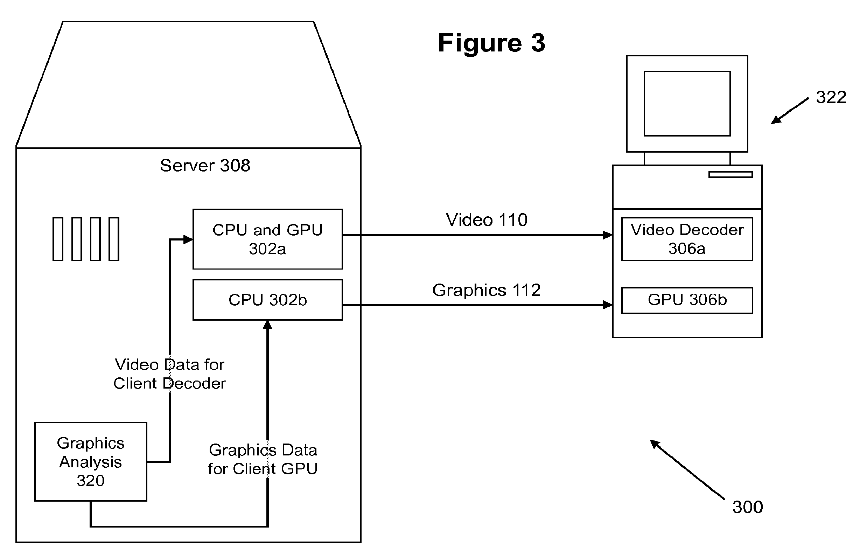

Fig. 3 illustrates an example architecture 300 which may be employed in some embodiments of the invention to render graphics across a network. Architecture 300 may include one or more users at one or more client station(s) 322 that operate or utilize a central program at a server 308. Such central programs include, for example, networked game programs. Client station 322 comprises any type of computing station that may be used to operate or interface with a central program at server 308. Examples of such client stations 322 include for example, workstations, personal computers, remote computing terminals, or dedicated gaming platforms.

The client station 322 comprises a display device, such as a display monitor, for displaying visual graphics to users at the client station 322. Client station 322 also comprises one or more input devices for the user to provide operational control over the activities of client station 322 and architecture 300, such as a mouse or keyboard to manipulate a pointing object in a graphical user interface.

The client station 322 comprises both a video decoder 306a and a GPU 306b. The video decoder 306a can be used to display a stream of video data 110 in any suitable video format. The GPU 306b can be used to render graphics at the client station 322 based upon graphics data 112.

The server 308 comprises a graphics analysis module 320 that includes components to analyze the visual data intended to be displayed by a central program, and to determine whether the visual data should undergo rendering at the server 308 or remote rendering at the client station 322.

If the graphics analysis module 320 determines that local rendering should be performed at the server 308, then the combination of the CPU and GPU. 302a at the server 308 is employed to render the graphics. The server-based CPU would describe the visual content at an abstract level and the server-based GPU would render the content in a pixel form into video data 110. The video data 110 is sent to the client station 322, where the client-based video decoder 306a processes the pixel data for display on the client's display device.

If the graphics analysis module 320 determines that remote rendering should be performed at the client station 322, then the CPU 302b at the server 308 is employed to generate graphics data 112 at an abstract level (e.g., using graphics commands with vector data rather than raster data), and the graphics data 112 is sent to the client station 322. The client-based GPU. 306b processes the graphics data 112 to render the visual content in a pixel form, which is then immediately displayed on the client's display device. One approach that can be taken to perform client-side rendering is disclosed in U.S. Provisional Application 61/384,265.

According to some embodiments of the invention, the graphics analysis module 320 can operate to mix and match how objects even within the same frame are rendered. Thus, the same frame may include some objects that are rendered at the server 308 using the server-based CPU and GPU 302a, while other objects are rendered at the client 322 using the client-side GPU 306b.

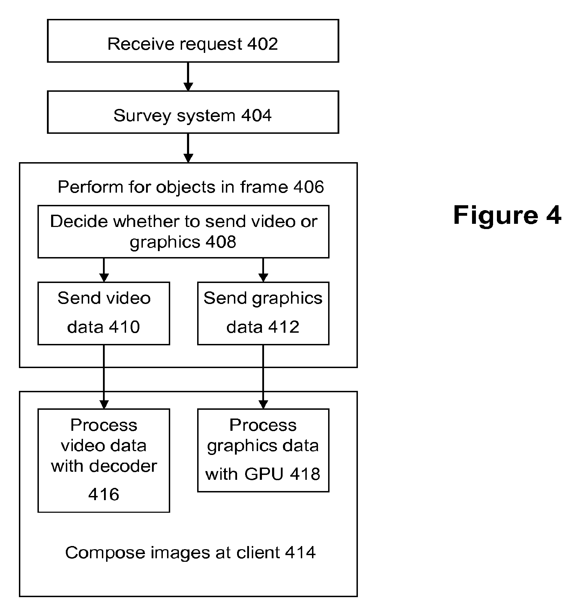

Fig. 4 shows a flowchart of an approach for implementing mixed server-client rendering according to some embodiments of the invention. At 402, a request is received to display visual content at the client station. The request comprises any suitable set of operations or commands that relates to visual content that would need to be rendered for display at the client station. For example, in the gaming context, the request could result from the game software determining that the visual scene to be displayed to the user needs to be changed in some way.

At 404, a survey is performed of the architecture/system to determine the capabilities of the system for performing either/both server-side rendering or client-side rendering. For example, this action can be taken to identify the specific GPU that exists at the client station or to determine the status or resource availability (e.g., GPU memory) of the GPU at the client station.

For the objects in the frames to be displayed, the actions of 406 are performed to determine, at 408, whether server-side rendering or client-side rendering is to be performed. For server-side rendering, the CPU and GPU at the server are employed to render the pixel data, and therefore the resultant video data is streamed to the client as described at 410. For client-side rendering, the CPU at the server is used to provide an abstract determination of the visual display, but graphics data is sent to the client station for rendering by the client-based GPU as described at 412.

As used herein, the term "object" refers to any suitable granularity of data for rendering. For example, the object could comprise any object or entity to be displayed on a screen, e.g., a discrete object (such as an action figure) within a display frame. The object could also correspond to an area of display real estate having a bounded set of coordinates. The object could also correspond to a specific command/API function call (or a set of such commands/calls) that relates to display of an entity on the screen).

Certain objects will naturally lend themselves to be more efficiently handled one way versus the other. For example, it is likely that background scenes that do not change very often will be more efficiently rendered using the client-based GPU. This is because the data for the background objects will likely already reside at the client-side memory cache, and any changes in the display will likely only differ in terms of the viewing angle or position for the background objects rather than any actual changes in the objects themselves. Therefore, compared to the relatively high cost of sending server-rendered pixel data across the network for the background objects (requiring high network bandwidth), it would be much cheaper to send the graphics data comprising only the commands/calls to display the background objects from a different angle (which requires low network bandwidth) and to allow rendering to occur at the client with the client-based GPU.

On the other hand, objects that are subject to a larger amount of dynamic visual changes (e.g., because of animation) may lend themselves to be more efficiently handled by server-side rendering. This is because in this situation, the cost of sending a stream of server-rendered pixels as video data may be cheaper than sending a stream of vector data (which is also dynamically changing) and which then needs to be rendered at the client.

Regardless, it is likely that some of the objects will be rendered at the client side and some rendered at the server side. At 414, the image frames are composed from the different sets of data sent to the client. In particular, at 416, the video data is processed for display by the client-side video decoder. At 418, the graphics data is processed with the client-side GPU.

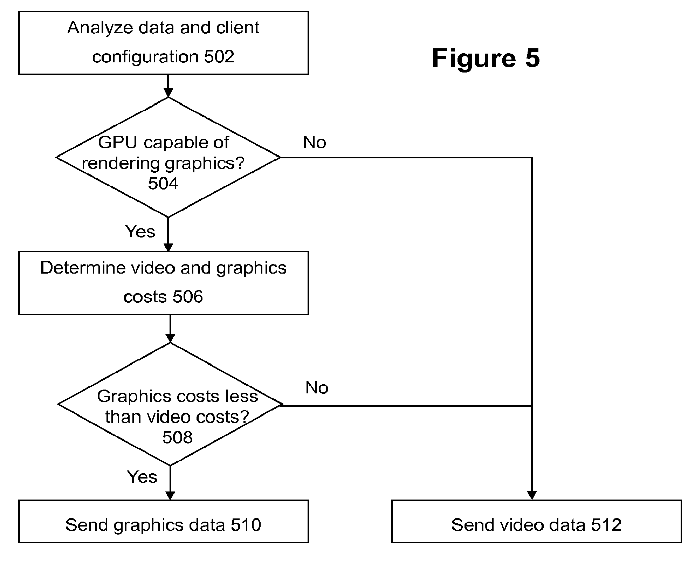

Fig. 5 shows a flowchart of an approach for determining whether server-side rendering or client-side rendering is to be performed. At 502, analysis is performed of the data and client configurations. This action involves an analysis of the visual data to be rendered as well as the details of the GPU resources at the client.

At 504, a determination is made whether the GPU is capable of rendering the visual data. If not, then the process proceeds to 512 to perform server-side rendering so that video data is sent to the client.

If the GPU is intrinsically capable of rendering the visual data, an additional determination is made at 506 of the costs for performing the server-side rendering and the client-side rendering. According to some embodiments, the costs for both approaches would be calculated using a common unit of measurement to facilitate comparisons. For example, the costs cold be calculated in some embodiments in units of "bits per second."

At 508, a comparison of the different costs is performed to determine which approach provides a relatively more efficient mechanism to render the visual data. If the server-side rendering costs are relatively less expensive, then server-side rendering is performed to send video data to the client at 512. On the other hand, if client-side rendering costs are relatively less expensive, then graphics data is sent to the client at 510 so that the client-side GPU can be used to performed client-side rendering.

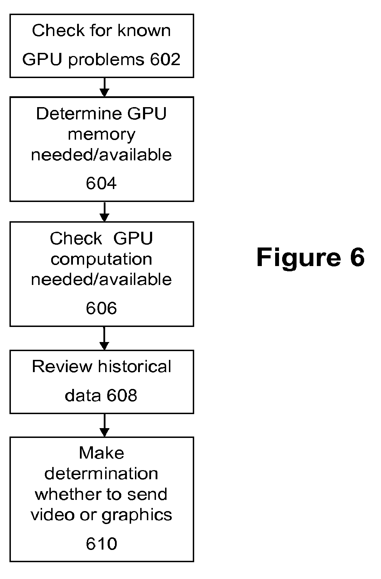

Fig. 6 shows a flowchart of an approach for determining whether the GPU is capable of rendering the visual data for a given object or set of objects in a frame. At 602, a check is made whether there are any known problems for the specific GPU type/model at the client that would prevent the client GPU from performing the desired rendering activities. For example, it is possible that there are known bugs with certain GPUs that negatively affect the GPU's ability to implement certain types of rendering operations. If the desired rendering of the current set of visual data relates to these known bugs, then this situation would weight against performing client-side rendering.

At 604, statistics monitoring is performed to determine the amount of GPU memory that is available at the client. A determination is also made of any additional GPU memory that may be required if client-side rendering is performed. For example, if data for the object to be displayed is already within the GPU memory cache and it did not change, then minimal or no additional memory may be needed. On the other hand, if the data for the object is not already within the GPU memory or if that data has changed, then additional GPU memory may be needed. If the available GPU memory is insufficient to handle additional memory requirements to perform client-side rendering, then server-side rendering is performed.

At 606, a check is made of the available GPU computation resources, as well as the computation needs to perform client-side rendering. In some embodiments, this action is performed by checking the current percentage of GPU utilization and comparing the "busy" percentage to the expected GPU utilization needed to perform the desired client-side rendering. If the required resource consumption exceeds the available resources, then server-side rendering is performed.

Historical data may also be checked at 608 to determine whether there are additional factors that need to be considered to see if an object is renderable at the client. For example, the expected GPU processor and memory utilization levels for certain objects that have successfully passed the checks of 604 and 606 may nevertheless have historically resulted in sub-optimal display performance in the past. Therefore, in some embodiments, historical analysis can also be used to determine whether an object should or should be rendered at the client.

At 610, the above factors are considered to determine whether the client-side GPU is capable of rendering the display object.

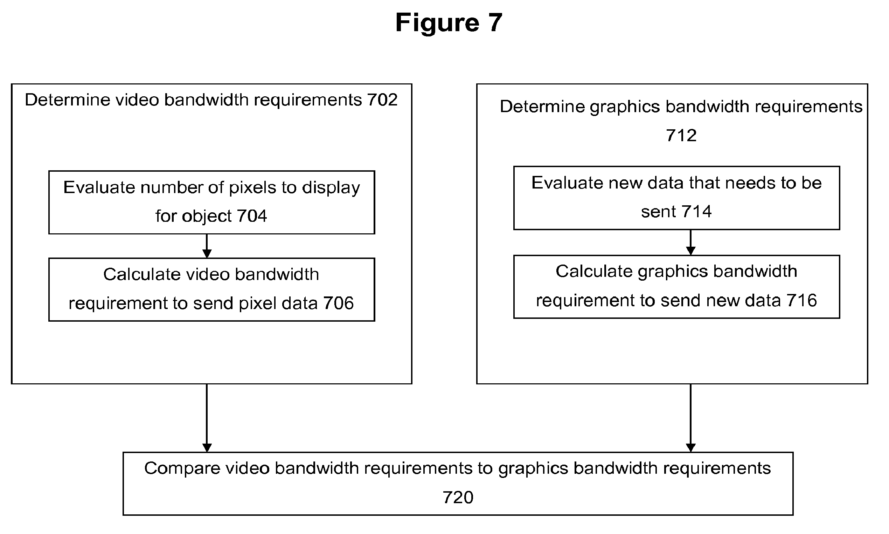

Any suitable approach can be taken to perform costs calculations for server-side and client-side rendering. For example, costs can be determined according to the bandwidth utilization needs of each approach. Fig. 7 shows a flowchart of an approach for determining and comparing the costs of performing client-side and server-side rendering when considered according to the bandwidth utilization needs of each approach. The path 702 along the left side of the flowchart corresponds to determination of the server-side rendering costs and the path 712 along the right side of the flowchart corresponds to determination of the client-side rendering costs.

To determine server-side rendering costs, path 702 is performed by first evaluating, at 704, the number of pixels that need to be displayed for the object (or set of objects) under examination. This action can be performed by identifying the size/configuration of the object in question, and then determining the number of pixels. For example, an object that is bound by a rectangular box of 100 pixels by 100 pixels corresponds to a total of 10000 pixels. Next, at 706, calculations are performed to determine the bits/second bandwidth needs to transmit those identified pixels in a given period of time.

To determine client-side rendering costs, path 712 is performed by evaluating, at 714, the quantity of graphics data that would need to be transmitted to the client to allow rendering to occur at the client. If the graphics data for the object that is needed for the desired rendering operations already reside at the client side (and there are no or minimal changes to that data), then only a small amount of data may need to be sent across the network from the server to the client. On the other hand, for visual display of animation, it is possible that the object data may be changing frequently, which means that a very large amount/rate of graphics data would need to be sent to the client to allow the desired rendering to occur with the client GPU. At 716, calculations are performed to determine the bits/second bandwidth needs to transmit the quantity of data in the given period of time.

A comparison is performed at 720 to determined the relative costs of performing the server-side and client-side rendering for the object being examined. If the relative costs are such that it is cheaper to perform client-side rendering, then graphics data will be sent from the server to the client so that the client-side GPU is used to render the visual data. On the other hand, if the relative costs are such that it is cheaper to perform server-side rendering, then the server-side GPU is used to render the visual data, and therefore video data will be sent from the server to the client so that the client-side video decoder is used to only display the data.

The above-actions are performed successively for the different objects in a frame so that the optimal mixture of client-side and server-side rendering is performed to render and display the visual data.

Therefore, what has been described is an improved approach for rendering visual data. The invention allows a system to mix and match the different rendering approaches so that an optimal distribution of work is provided among the different processing components in the system. The analysis can be performed on a frame-by-frame, object-by-object basis. The present approach is quite advantageous in that it is flexible and can dynamically consider the trade-offs of either performing server-side rendering or client-side rendering.

### SYSTEM ARCHITECTURE OVERVIEW

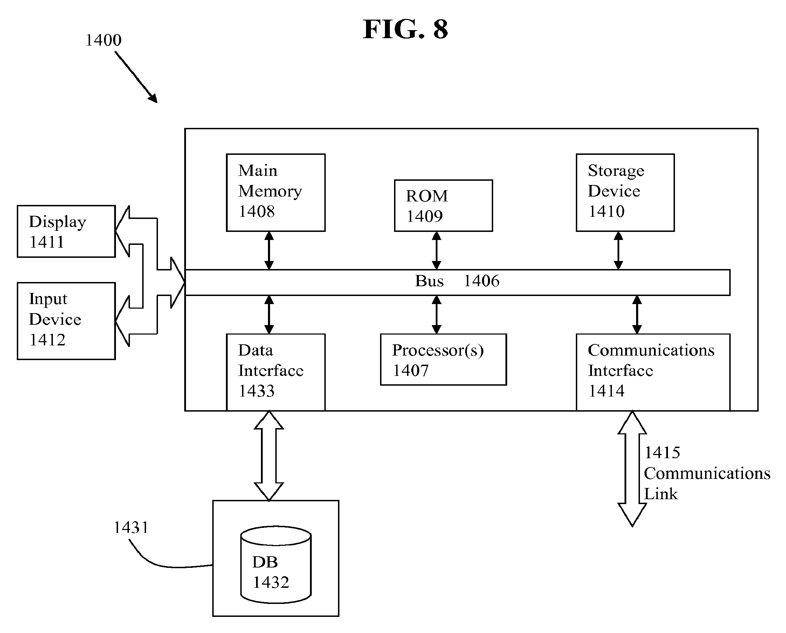

Fig. 8 is a block diagram of an illustrative computing system 1400 suitable for implementing an embodiment of the present invention. Computer system 1400 includes a bus 1406 or other communication mechanism for communicating information, which interconnects subsystems and devices, such as processor 1407, system memory 1408 (e.g., RAM), static storage device 1409 (e.g., ROM), disk drive 1410 (e.g., magnetic or optical), communication interface 1414 (e.g., modem or Ethernet card), display 1411 (e.g., CRT or LCD), input device 1412 (e.g., keyboard), data interface 1433, and cursor control.

According to one embodiment of the invention, computer system 1400 performs specific operations by processor 1407 executing one or more sequences of one or more instructions contained in system memory 1408. Such instructions may be read into system memory 1408 from another computer readable/usable medium, such as static storage device 1409 or disk drive 1410. In alternative embodiments, hard-wired circuitry may be used in place of or in combination with software instructions to implement the invention. Thus, embodiments of the invention are not limited to any specific combination of hardware circuitry and/or software. In one embodiment, the term "logic" shall mean any combination of software or hardware that is used to implement all or part of the invention.

The term "computer readable medium" or "computer usable medium" as used herein refers to any medium that participates in providing instructions to processor 1407 for execution. Such a medium may take many forms, including but not limited to, non-volatile media and volatile media. Non-volatile media includes, for example, optical or magnetic disks, such as disk drive 1410. Volatile media includes dynamic memory, such as system memory 1408.

Common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, or any other medium from which a computer can read.

In an embodiment of the invention, execution of the sequences of instructions to practice the invention is performed by a single computer system 1400. According to other embodiments of the invention, two or more computer systems 1400 coupled by communication link 1415 (e.g., LAN, PTSN, or wireless network) may perform the sequence of instructions required to practice the invention in coordination with one another.

Computer system 1400 may transmit and receive messages, data, and instructions, including program, i.e., application code, through communication link 1415 and communication interface 1414. Received program code may be executed by processor 1407 as it is received, and/or stored in disk drive 1410, or other non-volatile storage for later execution. Computer system 1400 may communicate through a data interface 1433 to a database 1432 on an external storage device 1431.

In the foregoing specification, the invention has been described with reference to specific embodiments thereof. It will, however, be evident that various modifications and changes may be made thereto. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A computer implemented method for remote graphics rendering of visual data in a client-server system with a client (322) and a server (308), comprising:
performing a survey of the client-server system at the server (308) to determine rendering capabilities of the server (308) and rendering capabilities of the client (322) ;
determining a server-side cost for performing server-side rendering of the visual data;
determining a client-side cost for performing client-side rendering of the visual data;
comparing the server-side cost to the client-side cost;
determining, at the server (308), whether rendering of the visual data is to be performed by the server (308) or the client (322) based on the comparing of the server-side cost to the client-side cost;
when the rendering of the visual data is determined to be performed by the server (308) based on the server-side cost being less than the client-side cost:
rendering graphics data associated with the visual data at the server (308) to generate video data (110); and
transmitting the video data (110) by the server (308) to the client (322); and when the rendering of the visual data is determined to be performed by the client (322) based on the client-side cost being less than the server-side cost:
generating graphics data (112) associated with the visual data at the server (308); and
transmitting the graphics data (112) to the client (322), wherein the graphics data is rendered by the client (322).

2. The computer implemented method of claim 1, wherein the visual data is a video frame.

3. The computer implemented method of claim 1, wherein the visual data is an object of a video frame.

4. The computer implemented method of claim 1, wherein performing the survey of the client-server system comprises:
analyzing the visual data; and
analyzing graphics processing resources of the client (322).

5. The computer implemented method of claim 4, wherein analyzing graphics processing resources of the client (322) comprises determining whether there are any known problems for the graphics processing resources of the client (322) that would prevent the client (322) from performing rendering activities.

6. The computer implemented method of claim 4, wherein analyzing graphics processing resources of the client (322) comprises performing statistics monitoring to determine an amount of graphics processing memory that is available at the client (322).

7. The computer implemented method of claim 4, wherein analyzing graphics processing resources of the client (322) comprises determining any additional graphics processing memory required to perform rendering of the visual data at the client (322).

8. The computer implemented method of claim 4, wherein analyzing graphics processing resources of the client (322) comprises:
determining an amount of available graphics processing resources of the client (322);
determining an amount of graphics processing necessary to perform rendering of the visual data at the client (322).

9. The computer implemented method of claim 4, wherein analyzing graphics processing resources of the client (322) comprises analyzing historical data associated with the graphics processing resources of the client (322) to determine whether rendering of the visual data can be performed at the client (322).

10. The computer implemented method of claim 1, wherein determining the costs for performing server-side rendering for the visual data comprises:
evaluating a number of pixels needed to display the visual data; and
performing calculations to determine a bits/second bandwidth needed to transmit the number of pixels in a given period of time.

11. The computer implemented method of claim 1, wherein determining the costs for performing client-side rendering for the visual data comprises:
evaluating a quantity of graphics data needed to perform client-side rendering for the visual data; and
performing calculations to determine a bits/second bandwidth needed to transmit the quantity of graphics data in a given period of time.

12. The computer implemented method of claim 1, wherein comparing the costs for performing server-side rendering and client-side rendering for the visual data comprises:
determining that rendering of the visual data is to be performed by the server when the costs for performing client-side rendering exceed the costs for performing server-side rendering; and
determining that rendering of the visual data is to be performed by the client when the costs for performing server-side rendering exceed the costs for performing client-side rendering.

13. The method of any one of claims 1 to 12 implemented as a system having means for implementing the method steps or as a computer program product comprising a computer-usable storage medium having executable code to execute the method steps.

## Patentansprüche

1. Ein computerimplementiertes Verfahren für die Remote-Grafikwiedergabe visueller Daten in einem Client-Server-System mit einem Client (322) und einem Server (308), umfassend:
Durchführung einer Abfrage des Client-Server-Systems am Server (308), um die Wiedergabefähigkeiten des Servers (308) und die Wiedergabefähigkeiten des Clients (322) zu bestimmen;
Bestimmung serverseitiger Kosten für die Durchführung der serverseitigen Wiedergabe der visuellen Daten;
Bestimmung clientseitiger Kosten für die Durchführung der clientseitigen Wiedergabe der visuellen Daten;
Vergleich der serverseitigen Kosten mit den clientseitigen Kosten;
Bestimmung, am Server (308), ob die Wiedergabe der visuellen Daten vom Server (308) oder vom Client (322) durchgeführt werden soll, auf Basis des Vergleichs der serverseitigen Kosten mit den clientseitigen Kosten;
wenn bestimmt wird, dass die Wiedergabe der visuellen Daten vom Server (308) durchgeführt werden soll, da die serverseitigen Kosten niedriger als die clientseitigen Kosten sind:
Wiedergabe der Grafikdaten, die mit den visuellen Daten verbunden sind, am Server (308), um Videodaten (110) zu erzeugen; und
Übertragen der Videodaten (110) durch den Server (308) an den Client (322); und, wenn bestimmt wird, dass die Wiedergabe der visuellen Daten vom Client (322) durchgeführt werden soll, da die clientseitigen Kosten niedriger als die serverseitigen Kosten sind:
Erzeugen von Grafikdaten (112), die mit den visuellen Daten am Server (308) verbunden sind; und
Übertragen der Grafikdaten (112) an den Client (322), wobei die Grafikdaten vom Client (322) wiedergegeben werden.

2. Computerimplementiertes Verfahren nach Anspruch 1, worin die visuellen Daten ein Video-Frame sind.

3. Computerimplementiertes Verfahren nach Anspruch 1, worin die visuellen Daten ein Objekt eines Video-Frame sind.

4. Computerimplementiertes Verfahren nach Anspruch 1, worin die Durchführung der Abfrage des Client-Server-Systems umfasst:
Analyse der visuellen Daten; und
Analyse der grafikverarbeitenden Ressourcen des Clients (322).

5. Computerimplementiertes Verfahren nach Anspruch 4, worin die Analyse der grafikverarbeitenden Ressourcen des Clients (322) die Bestimmung umfasst, ob es bekannte Probleme der grafikverarbeitenden Ressourcen des Clients (322) gibt, die verhindern würden, dass der Client (322) Wiedergabeaktivitäten ausführt.

6. Computerimplementiertes Verfahren nach Anspruch 4, worin die Analyse der grafikverarbeitenden Ressourcen des Clients (322) die Durchführung einer statistischen Überwachung umfasst, um eine Menge des grafikverarbeitenden Speichers zu bestimmten, der am Client (322) verfügbar ist.

7. Computerimplementiertes Verfahren nach Anspruch 4, worin die Analyse der grafikverarbeitenden Ressourcen des Clients (322) die Bestimmung von eventuellem zusätzlichem grafikverarbeitendem Speicher umfasst, der nötig ist, um die Wiedergabe der visuellen Daten am Client (322) durchzuführen.

8. Computerimplementiertes Verfahren nach Anspruch 4, worin die Analyse der grafikverarbeitenden Ressourcen des Clients (322) umfasst:
Bestimmung einer Menge verfügbarer grafikverarbeitender Ressourcen des Clients (322);
Bestimmung einer Menge der Grafikverarbeitung, die nötig ist, um die Wiedergabe der visuellen Daten am Client (322) durchzuführen.

9. Computerimplementiertes Verfahren nach Anspruch 4, worin die Analyse der grafikverarbeitenden Ressourcen des Clients (322) die Analyse historischer Daten umfasst, die mit der grafikverarbeitenden Ressource des Clients (322) verbunden sind, um zu bestimmen, ob die Wiedergabe der visuellen Daten am Client (322) durchgeführt werden kann.

10. Computerimplementiertes Verfahren nach Anspruch 1, worin die Bestimmung der Kosten für die Durchführung der serverseitigen Wiedergabe für die visuellen Daten umfasst:
Beurteilung einer Zahl der Pixel, die für die Anzeige der visuellen Daten nötig sind; und
Durchführung von Berechnungen zur Bestimmung einer Bandbreite in Bit/Sekunden, die nötig ist, um die Zahl der Pixel in einem bestimmten Zeitraum zu übertragen.

11. Computerimplementiertes Verfahren nach Anspruch 1, worin die Bestimmung der Kosten für die Durchführung der clientseitigen Wiedergabe für die visuellen Daten umfasst:
Beurteilung der Menge der Grafikdaten, die nötig sind, um die clientseitige Wiedergabe
für die visuellen Daten durchzuführen; und
Durchführung von Berechnungen zur Bestimmung einer Bandbreite in Bits/Sekunden, die nötig ist, um die Menge der Grafikdaten in einem bestimmten Zeitraum durchzuführen.

12. Computerimplementiertes Verfahren nach Anspruch 1, worin der Vergleich der Kosten für die Durchführung der serverseitigen Wiedergabe und der clientseitigen Wiedergabe für die visuellen Daten umfasst:
Bestimmung, dass die Wiedergabe der visuellen Daten durch den Server durchgeführt werden muss, wenn die Kosten für die Durchführung der clientseitigen Wiedergabe die Kosten für die Durchführung der serverseitigen Wiedergabe übersteigt; und
Bestimmung, dass die Wiedergabe der visuellen Daten durch den Client durchgeführt werden muss, wenn die Kosten für die Durchführung der serverseitigen Wiedergabe die Kosten für die Durchführung der clientseitigen Wiedergabe übersteigt.

13. Verfahren nach einem der Ansprüche 1 bis 12, implementiert als ein System, das die Mittel für die Implementierung der Verfahrensschritte hat, oder als Computerprogrammprodukt, das aus einem computernutzbaren Speichermedium mit ausführbarem Code zum Ausführen der Verfahrensschritte besteht.

## Revendications

1. Procédé exécuté par ordinateur pour le rendu graphique à distance de données visuelles dans un système client-serveur avec un client (322) et un serveur (308), comprenant :
la réalisation d'une étude du système client-serveur sur le serveur (308) pour déterminer les capacités de rendu du serveur (308) et les capacités de rendu du client (322) ;
la détermination du coût côté serveur pour réaliser le rendu côté serveur des données visuelles ;
la détermination du coût côté client pour réaliser le rendu côté client des données visuelles ;
la comparaison du coût côté serveur avec le coût côté client ;
la détermination, sur le serveur (308), si le rendu des données visuelles doit être réalisé par le serveur (308) ou le client (322) en fonction de la comparaison entre le coût côté serveur et le coût côté client ;
si l'on détermine que le rendu des données visuelles doit être réalisé par le serveur (308) basé sur le fait que le coût côté serveur est inférieur au coût côté client :
le rendu des données graphiques associées aux données visuelles sur le serveur (308) pour générer les données vidéo (110) ; et
la transmission des données vidéo (110) par le serveur (308) au client (322) ; et, si l'on détermine que le rendu des données visuelles doit être réalisé par le client (322) basé sur le fait que le coût côté client est inférieur au coût côté serveur :
la génération des données graphiques (112) associées aux données visuelles sur le serveur (308) ; et
la transmission des données graphiques (112) au client (322) où les données graphiques sont rendues par le client (322).

2. Procédé exécuté par ordinateur selon la revendication 1, dans lequel les données visuelles sont une image vidéo.

3. Procédé exécuté par ordinateur selon la revendication 1, dans lequel les données visuelles sont un objet d'une image vidéo.

4. Procédé exécuté par ordinateur selon la revendication 1, dans lequel la réalisation de l'étude du système client-serveur comprend :
l'analyse des données visuelles ; et
l'analyse des ressources de traitement graphique du client (322).

5. Procédé exécuté par ordinateur selon la revendication 4, dans lequel l'analyse des ressources de traitement graphique du client (322) comprend la détermination s'il y a des problèmes connus pour les ressources de traitement graphique du client (322) qui pourraient empêcher le client (322) de réaliser les activités de rendu.

6. Procédé exécuté par ordinateur selon la revendication 4, dans lequel l'analyse des ressources de traitement graphique du client (322) comprend la réalisation d'un contrôle statistique pour déterminer une quantité de mémoire de traitement graphique qui est disponible sur le client (322).

7. Procédé exécuté par ordinateur selon la revendication 4, dans lequel l'analyse des ressources de traitement graphique du client (322) comprend la détermination de toute mémoire de traitement graphique additionnelle requise pour réaliser le rendu des données visuelles sur le client (322).

8. Procédé exécuté par ordinateur selon la revendication 4, dans lequel l'analyse des ressources de traitement graphique du client (322) comprend:
la détermination d'une quantité de ressources de traitement graphique disponibles au client (322) ;
la détermination d'une quantité de traitement graphique nécessaire pour exécuter le rendu des données visuelles sur le client (322).

9. Procédé exécuté par ordinateur selon la revendication 4, dans lequel l'analyse des ressources de traitement graphique du client (322) comprend l'analyse de données historiques associées aux ressources de traitement graphique du client (322) pour déterminer si le rendu des données visuelles peut être réalisé sur le client (322).

10. Procédé exécuté par ordinateur selon la revendication 1 dans lequel la détermination des coûts pour réaliser le rendu côté serveur des données visuelles comprend :
l'évaluation du nombre de pixels nécessaires pour afficher les données visuelles ; et
la réalisation de calculs pour déterminer une largeur de bande en bits/seconde nécessaire pour transmettre le nombre de pixels au cours d'une période de temps donnée.

11. Procédé exécuté par ordinateur selon la revendication 1 dans lequel la détermination des coûts pour réaliser le rendu côté client des données visuelles comprend :
l'évaluation d'une quantité de données graphiques nécessaires pour réaliser le rendu côté client pour les données visuelles ; et
la réalisation de calculs pour déterminer une largeur de bande en bits/seconde pour transmettre la quantité de données graphiques au cours d'une période de temps donnée.

12. Procédé exécuté par ordinateur selon la revendication 1 dans lequel la comparaison des coûts pour réaliser le rendu côté serveur et le rendu côté client pour les données visuelles comprend :
la détermination du fait que le rendu des données visuelles doit être réalisé par le serveur lorsque les coûts pour réaliser le rendu côté client excèdent les coûts pour réaliser le rendu côté serveur ; et
la détermination du fait que le rendu des données visuelles doit être réalisé par le client lorsque les coûts pour réaliser le rendu côté serveur excèdent les coûts pour réaliser le rendu côté client.

13. Procédé selon l'une quelconques des revendications 1 à 12 exécuté comme un système ayant des moyens permettant d'exécuter les étapes de la méthode ou bien comme un produit de programme informatique comprenant un support d'enregistrement utilisable par un ordinateur et ayant un code exécutable pour exécuter les étapes de la méthode.
